# EUROPEAN PATENT SPECIFICATION

(11) **EP 2 711 615 B1**
(45) Date of publication and mention of the grant of the patent: **31.10.2018**
(21) Application number: 13185114.9
(22) Date of filing: 19.09.2013
(51) Int. Cl.: G02B 19/00, F21S 8/04, F21V 5/04, F21S 9/02, F21Y 115/10

(54) **Lens and light emitting device incorporating a lens**
Linse und lichtemittierende Vorrichtung umfassend eine Linse
Lentille et dispositif d'émission de lumière intégrant une lentille

(30) Priority: 20.09.2012 GB 201216833
(43) Date of publication of application: 26.03.2014
(73) Proprietor: Eaton Intelligent Power Limited, Dublin 4 (IE)
(72) Inventor: MORGAN, Martin, James, Cwmbran, Gwent NP44 3AW (GB); LAURET, Jean-Pierre, 01460 Montréal La Cruise (FR)
(74) Representative: Addiss, John William

(56) References cited:
- EP-A2- 2 565 525
- WO-A1-2011/042837
- WO-A1-2011/076214
- WO-A1-2012/021718
- US-A1- 2006 208 267
- US-A1- 2009 290 360
- US-A1- 2010 302 786
- US-A1- 2011 007 513

## Description

The present invention relates to a lens for directing incident light from a diffuse light source, such as an LED, into a predetermined, spatially limited, light distribution. The lens may be suitable for directing output light from a wall-mounted light emitting device, such as a visual alarm device (VAD), e.g. a fire alarm base unit or beacon, in a desired direction, e.g. to redirect illumination from unimportant regions (e.g. ceiling) to important regions (e.g. the floor and walls).

It is well known to provide networked fire alarms and smoke detectors in commercial buildings. Such networked fire alarms often comprise a plurality of ceiling-mounted or wall-mounted units having a siren and a beacon for producing noise and light when a fire is detected. The light produced by the beacon can be used as emergency lighting, e.g. to illuminate a passage for evacuation.

It may be important for the light for the beacon to be visible in all directions around the ceiling-mounted or wall-mounted unit. Conventionally this is achieved by mounted multiple light sources on the unit. These units therefore often comprise a large number of components, draw a relatively large amount of power when operating, and require careful and regular maintenance.

US 2010/0302786 discloses a lens for distribution of light predominantly toward a preferential side from a light emitter having an emitter axis and defining an emitter plane. The lens has an emitter-adjacent base end forming an emitter-receiving opening to an emitter-surrounding cavity defined by an inner surface which includes a front sector centered on the preferential side and a back sector centered on the non-preferential side radially opposite the preferential side. The front and back sectors differ in their respective configurations for refracting light from the emitter. The lens further includes an primary back surface positioned to receive light from at least a portion of the inner-surface back sector and configured for total internal reflection thereof. The inner-surface back sector and the primary back surface extend along substantially elliptical cross-sections in planes substantially parallel to the emitter plane. The emitter-adjacent base end forms a back opening to a back cavity substantially centered on the non-preferential side and partially bounded by the primary back surface.

At its most general, the present invention provides a lens for a wall-mounted light emitting device, the lens being arranged to efficiently redistribute incident light from a diffuse light source travelling in unimportant directions into an output light distribution that is targeted in a region of importance. In one embodiment, the invention provides a lens that captured a hemispherical light distribution from a surface-mounted LED and redirects the top half of that distribution back towards the bottom half to create an output light distribution that is spread in a half hemisphere in the lower quadrant of intersecting horizontal and vertical planes.

According to an aspect of the present invention there is provided a ceiling-mounted light emitting device according to claim 1.

The first and second refractive boundaries and the reflector cooperate to redirect the upper half of the incident light (i.e. the light from the light source directed above the optical axis) in an approximately transverse distribution (e.g. to illuminate the walls of a room). Meanwhile the first and second refractive boundaries also cooperate to redirect (or spread) the lower half of the incident light into a spread distribution suitable for illuminating the floor and walls of a room.

Herein, the base plane can be interpreted as a flat vertical plane and the optical axis as a horizontal line normal to that plane. References to upward and downward directions with respect to the optical axis are to be interpreted with reference to a horizontal plane containing the optical axis. Similarly, references to a transverse direction are to be interpreted as a direction parallel to an axis defined by the intersection of the horizontal plane with the base plane.

Preferably, the reflector is a panoramic reflective surface which exhibits a collimator function. The reflector is thus arranged maintain the transverse angular distribution of the incident light, whilst narrowing its vertical angular distribution. The panoramic reflector can thus focus the light incident thereon into a fan-like distribution directed towards the second refractive boundary.

The panoramic reflective surface may be the lower surface of an upper recess formed in the back surface of the lens body, the lower surface being angled relative to the optical axis to ensure total internal reflection of light incident thereon from the cavity. The lower surface may have a number of angled facets to alter the transverse distribution of the reflected light. For example, it may be desirable to increase the amount of light directed to the outer side edges of the second refractive boundary. The reflective surface may be optically polished.

• The first and second refractive boundaries may comprise optically transmissive surfaces. These surface may be frosted to scatter the transmitted light, which may be useful for reducing local homogeneity defects.

The first refractive boundary may comprise a top surface of the cavity which faces towards the reflector and an inner surface of the cavity which faces towards the second refractive boundary. The first refractive boundary may function as a delimiter between light destined for the reflector and light destined directly for the second refractive boundary. The shape of the top surface may corresponds to the shape of the reflector, whereby light transmitted by the top surface is received at the reflector. In other words, the geometry of the top surface is designed considering the path of upward light from the light source, so that all upward light that would be incident on the reflector in the absence of the first refractive boundary is transmitted by the top surface.

The top surface of the cavity may have an undulating profile to alter the distribution of light from the cavity on the reflector. The undulating profile may function to direct a greater proportion of light towards the transverse edges of the reflective surface.

The inner surface of the cavity may comprise an upper portion comprising a band that depends from the edge of the top surface, a lower portion having a freeform shape, and a transition region in which the upper portion smoothly transforms into the lower portion. The upper portion is shaped to capture upwardly directed light from the cavity that would not be received at the reflector if the first refractive boundary were absent. The function of the upper portion is to refract this upwardly directed light into a flatter distribution to be received by the second refractive boundary. The band in the upper potion may thus have an inwardly sloping profile for refracting incident light in a downward direction towards the second refractive boundary. The band may be defined by a pair of symmetrical surfaces which extend into the lens body in a linear manner at an oblique angle. As described below, the second refractive boundary may further deflect this light in a downward direction. The upward light from the light source is deflected by a combination of reflection and refraction into a downward direction fan-like distribution. Preferably the refracted light distribution from the upper portion overlaps with the reflected light distribution shortly beyond the second refractive boundary.

The second refractive boundary may comprise: a top lens section arranged to receive deflected light from the reflector; an upper intermediate lens section beneath the top lens section and above the optical axis, the upper intermediate lens section being arranged to receive light from the upper portion of the inner surface of the cavity; a lower intermediate lens section beneath the upper intermediate lens section, the lower intermediate lens section straddling the optical axis; and a bottom lens section beneath the lower intermediate lens section, wherein the lower intermediate lens section and bottom lens section are arranged to receive light from the lower portion of the inner surface of the cavity.

The top lens section may have a freeform front surface which arches in a convex manner transversely across the lens, and has a concave profile which forms a transverse channel across the front of the lens. The channel may be positioned relative to the panoramic reflective surface to receive the output fan-like distribution therefrom. Refraction at the boundary in the transverse channel may spread the vertical angular distribution of the output light. The light ray from the uppermost edge of the reflector is preferably refracted to travel in a direction at a small angle (e.g. 1°) above the horizontal. The light ray from the bottommost edge of the reflector is preferably refracted to travel in a downward direction e.g. at an angle of 20-30° to the horizontal.

The upper intermediate lens section may have a freeform front surface which arches in a convex manner transversely across the lens. This surface may thus refract light in a uniform manner across the front surface of the lens. The freeform front surface of the upper intermediate lens section may have a profile comprising a linear slope outwards from the lens body with increasing distance from the top lens section. The function of this section is to refract light from the band in the upper portion of the inner surface of the cavity. The linear slope of the front surface may cause the light distribution from the cavity to be deflected in a downward direction, e.g. with an vertical angular distribution spread between a horizontal direction (0°) and a downward angle of 20-30°.

The bottom lens section may have a freeform front surface comprising a pair of convex bulges formed symmetrically about a vertical plane through the optical axis. The bulges may thus be separated by a gentle depression running down the centre of the bottom lens section. The function of the convex bulges is to spread downward light from lower portion of the cavity into a distribution for illuminating a region below the lens. In particular, each convex bulge may provide a focussing function towards a respective focal point laterally (and preferably downwardly) displaced from the optical axis. The focal points of the pair of convex bulges may thus act to focus light towards a region next to the two opposite corners of a virtual cube surrounding the lens and centred on the light source. This configuration ensures that there is light coverage over the base of the virtual cube (which may represent a floor surface) Downward light rays incident on the convex bulges are generally refracted in a manner which increases the vertical angle at which the light ray subtends to the horizontal. Light rays incident on the bottom edges of the convex bulges may be refracted backwards, i.e. with a vertical angle over 90° (e.g. 91°) to the optical axis. Similarly, light rays incident on the outer side edges of the convex bulges may be refracted so that the horizontal angle that they subtend to the optical axis exceeds 90°. The light distribution from the bottom lens section may therefore have a transverse angular extent of greater than 180° (e.g. 182°) and a vertical angular extend of greater than 90° (e.g. 91°). The light distribution from the bottom lens section may overlap with the light distribution from the top lens section and upper intermediate section.

The lower intermediate lens section may comprise a free form front surface that provides a smooth transition between the upper intermediate lens section and the pair of convex bulges in the bottom lens section. Light incident on this section of the front surface is deflected in a similar manner to the bottom lens section.

The lens may include an upwardly angled reflector formed below the cavity to deflect downward scattered light in the lens body towards the second refractive boundary. The upwardly angled reflector may be an upper reflective surface of a lower recess formed in the back surface of the lens body below the cavity. The lower recess may be a U-shaped recess whose shape conforms to the lower edge of the cavity. The lower recess may be sized to house one or more secondary light sources.

The lens body may comprise one or more protruding attachment portions located rearwardly of the base plane. For example, the attachment portions may include a flange around the rim of the lens body, or a plurality of backwardly protruding pins.

In the present invention, a pair of the lens discussed above are configured to operate on a ceiling-mounted lighting device. Here the lower section of the first refractive boundary in each lens may be arranged to direct the light in a semi-circular distribution on a horizontal floor surface below the ceiling-mounted lighting device, with the two lens producing overlapping distributions which combine into a circular distribution below the ceiling-mounted lighting device. Each lens is mounted on a side surface of the ceiling-mounted lighting device. The lenses may be identical to each other and mounted back to back on opposing side surfaces of the device. In one embodiment, the lenses in this type of ceiling-mounted device may be configured as explained above to illuminate a cylindrical or frustoconical coverage volume having a 15 m diameter at 3 m below the ceiling. Each lens has its own respective light source, which may be an LED mounted on a PCB mounted parallel to a side surface of the device.

An advantage of this arrangement is that only two lenses and light sources may be required for the device to provide a continuous light distribution beyond a predetermined distance therefrom. Thus, the edges of the second refractive boundary may be arranged to refract light incident thereon from the cavity in a rearward direction, whereby the light distribution from the pair of lens overlaps at a predetermined distance (e.g. 3 m or less) from the base unit.

An embodiment of the invention is discussed in detail below by way of example with reference to the accompanying drawings, in which:
Fig. 1 shows a back view of a lens that is an embodiment of the invention;
Fig. 2 shows a side view of the lens of Fig. 1;
Fig. 3 shows a perspective view of the lens of Fig. 1;
Fig. 4 shows a front view of the lens of Fig. 1;
Fig. 5 shows a cross-sectional view through line A-A in Fig. 4;
Fig. 6 shows a three-dimensional transparent perspective representation of the lens of Fig. 1;
Fig. 7 shows a half section of the drawing in Fig. 7, the half section being from the line A-A in Fig. 4 to one side of the lens;
Fig. 8a shows a side view ray-trace diagram through the lens of Fig. 1;
Fig. 8b shows a plan view ray-trace diagram through the lens of Fig. 1;
Fig. 9 shows a schematic cross-sectional view through a light emitting device that is another embodiment of the invention;
Fig. 10 shows a schematic view of a light distribution from the device of Fig. 9;
Fig. 11a shows a light distribution in a vertical plane from the device of Fig. 9;
Fig. 11b shows a light distribution in a horizontal plane from the device of Fig. 9;
Fig. 12a shows a three-dimensional transparent perspective representation of a lens that is an illustrative example suitable for a wall-mounted light device; and
Fig. 12b shows a half section of the drawing in Fig. 12a.

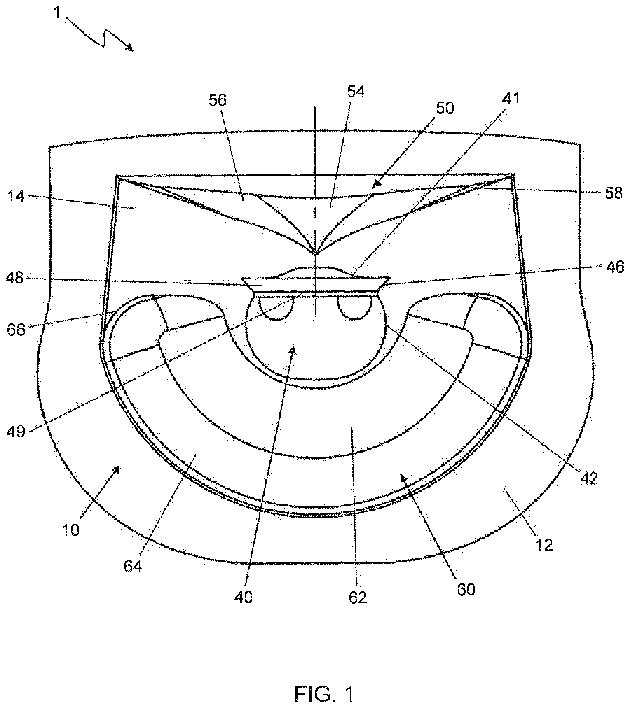

A first embodiment of the invention is discussed below with reference to Figs. 1 to 8. The first embodiment comprises a free form lens which has a one-piece lens body shaped to redirect incident light into a specific distribution when received from a diffuse light source located within the perimeter of the body of the lens. In order to give the desired distribution the lens has a reflector which redirects light and a front surface which refracts light incident upon it to spread the distribution of the light. The reflector and refracting front surface are integral parts of the lens body. The lens 1 is preferably made by injection moulding, using a suitable polycarbonate material, such as Makrolon® LED 2045.

The structure and configuration of the lens 1 is now discussed with reference to Figs. 1 to 7.

Fig. 1 shows a back view of a lens 1 that is an embodiment of the invention. The lens 1 has a back surface 10, which has a rim 12 around a sunken section 14. The sunken section 14 of the back surface 10 comprises an inner surface which has a number of recesses or openings formed therein, which extend into, but not through, the lens body 5. These recesses form functional parts of lens, and are discussed below.

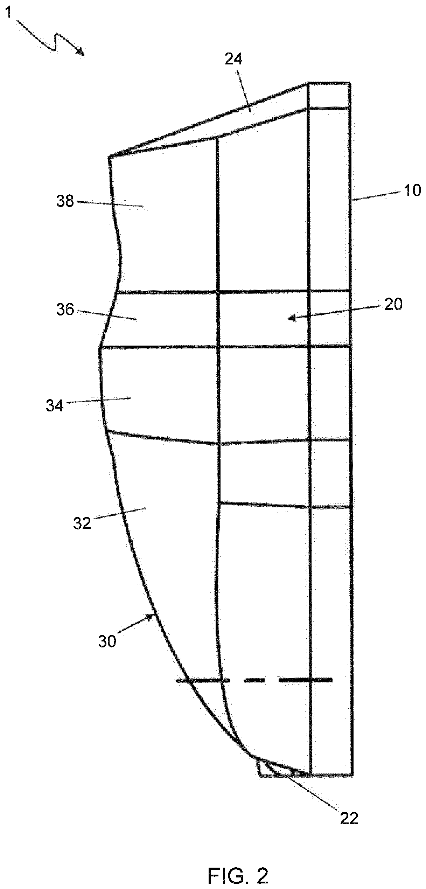

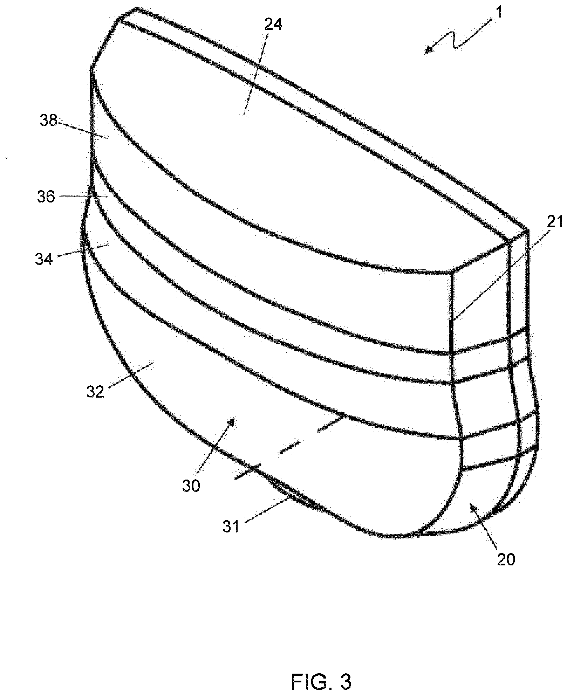

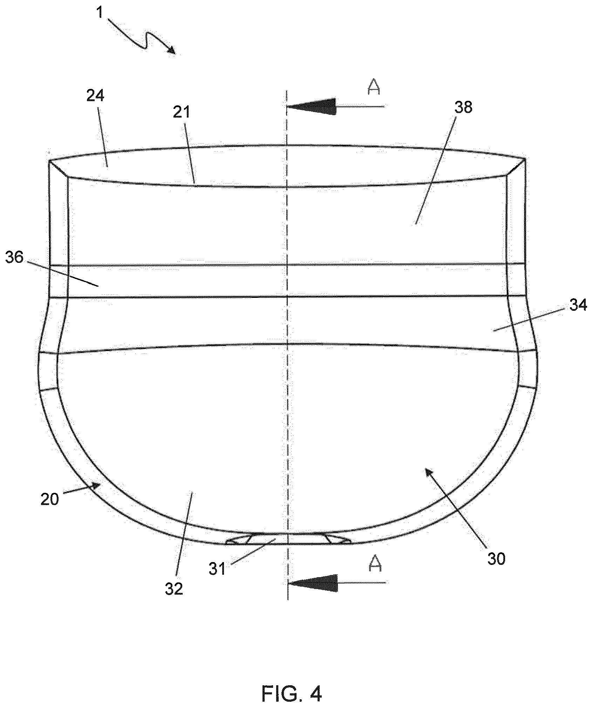

As shown in Figs. 2 and 3, the front of the lens comprises a plurality of lens sections arranged in a vertical stack between a bottom edge and a top edge of the lens. Each lens section comprises a front portion bounded on each side by a pair of side facets, which are surfaces that project forward from the rim 12. The front portions combine to form the front surface 30 of the lens. The side facets combine to form a side surface 20 of the lens. The top lens section 38 includes a top facet 24 which projects from the top edge of the rim 12 at a downwardly inclined angle to meet the front surface 30. The front portion of the bottom lens section 32 has a generally semi-circular shape when viewed from the front of the lens (see Fig. 4), whereby the side facets of the bottom lens section 32 curve underneath its front portion. The side facets of the bottom lens section 32 terminate at a rounded projection 31 formed at the bottom centre of the lens 1. The junction between the top facet 24 and the front surface 30 and the junction between the side surface 20 and the front surface 30 forms a unbroken front edge 21 of the lens 1, which frames the front surface 30.

The lens 1 is symmetrical about a vertical plane that bisects the front surface 30 and back surface 10 of the lens 1.

As shown in Fig. 4, the front surface 30 has four sections: the bottom lens section 32, which forms approximately the lower half of the front surface 30, a lower intermediate lens section 34, an upper intermediate lens section 36, and the top lens section 38. Each section has a different topography.

The front portion of each of the lower intermediate lens section 34, the upper intermediate lens section 36, and the top lens section 38 generally arches between its respective side facets, with the apex of the arch being on the plane of symmetry of the lens.

In contrast, the bottom lens section 32 has a gentle elongate depression formed in its front surface along the plane of symmetry. The gentle depression extends from the rounded projection 31 towards the lower intermediate lens section 34. The depth of the depression tapers to zero at the junction between the bottom lens section 32 and the lower intermediate lens section 34. The front surface of the bottom lens section 32 thus comprises a pair of convex bulges on each side of the depression. A result of the depression is that the height of each side facet of the bottom lens section 32 decreases as it approaches the rounded projection 31.

The front surface of the lower intermediate lens section 34 is a convex curved band with increasing radius upwards along the lens. The front surface of the upper intermediate lens section 36 is a convex curved band with decreasing radius upwards along the lens. The junction between the upper and lower intermediate sections therefore provides the forwardmost point on the front surface 30. The radius of the upper intermediate lens section 36 decreases in a linear manner, to form a linear slope towards its junction with the top lens section 38.

The top lens section 38 is a convex curved band with increasing radius upwards along the lens. The junction between the upper intermediate lens section 36 and the top lens section 38 therefore provides a lateral channel arching over the front surface 30.

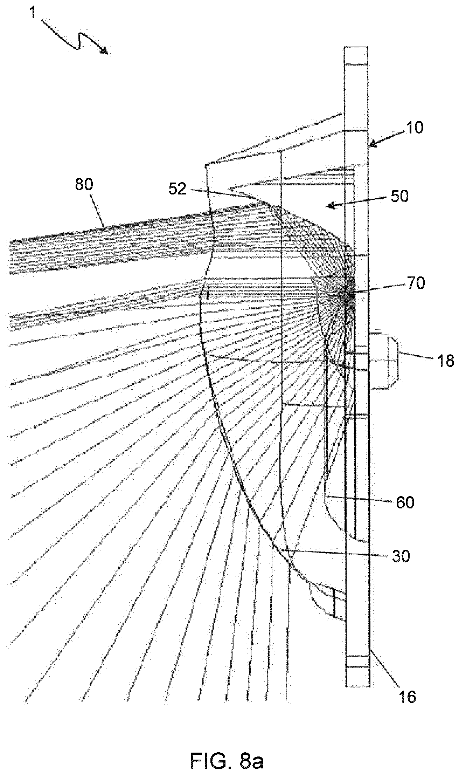

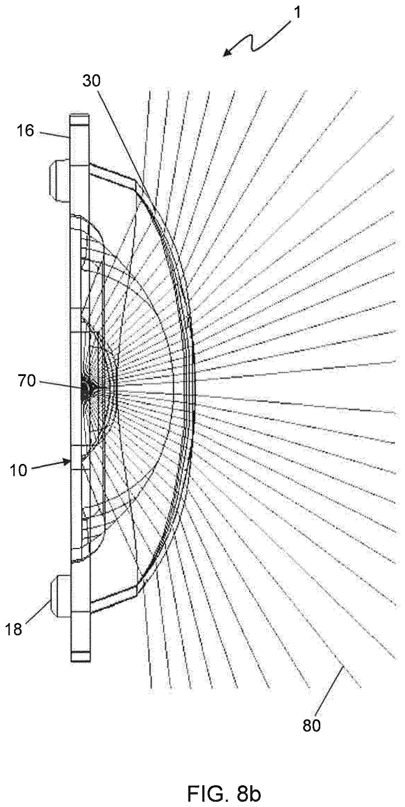

The shape of the front surfaces described above are for refracting light that is directed towards them through the lens body, as explained below with reference to Figs. 8a and 8b.

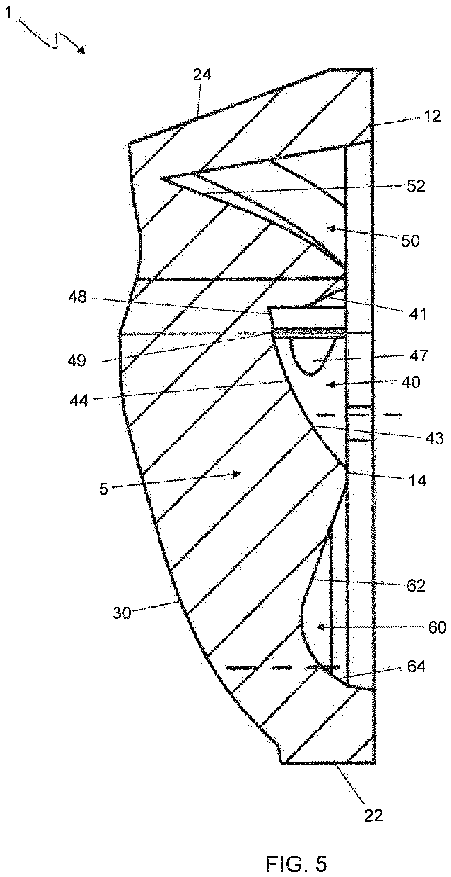

Considering now the back surface of the lens 1 with reference to Figs. 1, 5 and 6, the sunken section 14 of the lens body 5 has a recessed cavity 40 positioned substantially at the centre of the back surface 10. The cavity is bisected by the plane of symmetry. Fig. 5 shows a cut away view of the cavity 40 seen from the plane of symmetry.

The cavity 40 is defined by two sections: an indented upper section 41 which resembles a triangle when viewed from above, and a lower cupped section 43 having a tapering profile. The upper section 41 has an top surface facing upwards into the lens body which extends laterally between top edges of a pair of linear surfaces 48 which extend into the lens body at an angle to meet at the plane of symmetry. The top surface has an undulating profile which comprises a gradual change in height of the cavity, which smoothly increases from each top edge to a peak at the plane of symmetry.

From the top edges, each surface 48 slopes back into the cavity to a lip 49, which is aligned with the junction between the upper and lower intermediate lens sections 34, 36 on the front surface. The lower cupped section 43 is formed below the lip 49.

The lower cupped section 43 comprises a concave surface whose radial depth decreases downwardly along the lens, as shown in Fig. 5. Two transition portions 47 are located under the lip, one on each side of the plane of symmetry, to smoothly transform the linear profile of the lip 49 into the convex curve of the lower cupped section 43.

In use, the cavity is arranged to receive the incident light for the lens. The surfaces in the upper section 41 and lower section 43 act as refractive boundaries which operate to refract light incident on them to different sections of the front surface, as explained below with reference to Figs. 8a and 8b.

A panoramic reflector 50 is formed in the lens body above the cavity 40 along the sunken section 14. In this embodiment, the panoramic reflector 50 is formed by a surface 52 which defines a boundary between the lens body 5 and surrounding air at which total internal reflection takes place. The surface 52 is the lower surface of a recess formed in the sunken surface 14 at the back of the lens. The recess is located opposite the top lens section 38 of the front surface 30 of the lens.

The reflective surface 52 is generally angled obliquely relative to the back surface of the lens, the size of the angle being chosen to ensure that reflection of light incident from the top surface of the cavity 40 is reflected towards the front surface 30.

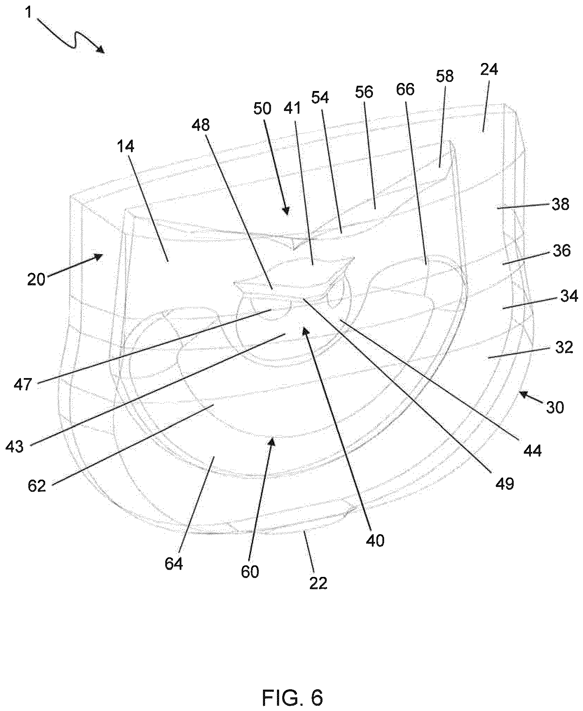

In this embodiment, however, the reflective surface 52 also functions to spread the reflected light in a lateral direction. To achieve this, the reflective surface 52 of the panoramic reflector has five sections, which are best appreciated by considering Fig. 6. Firstly, there is a central section 54 which is a convex shape (when considered from the incident light direction) which straddles the plane of symmetry of the lens and fans out from a point on the sunken section 14 at the back of the lens to a curve at an upper edge of the reflective surface 52.

On both sides of the central section 54 there is an intermediate concave section 56, which extends in a strip between a concave edge at the sunken section 14 and a concave edge on the upper edge of the reflective surface. The concave strips are wider at the upper edge of the reflective surface 52 than at the lower edge.

Finally, at the far side of each intermediate concave section 56 (and separated from the central section 54 by a respective concave section) there is a generally planar outer triangular section 58, which joins the side of each concave section to the sunken section 14 at the back of the lens. The triangular sections 58 are tilted towards the side surface 20 of the lens.

The front surface 30 of the lens 1, the inner walls of the cavity 40 and the reflective surface 52 of the panoramic reflector 50 are optically polished surfaces.

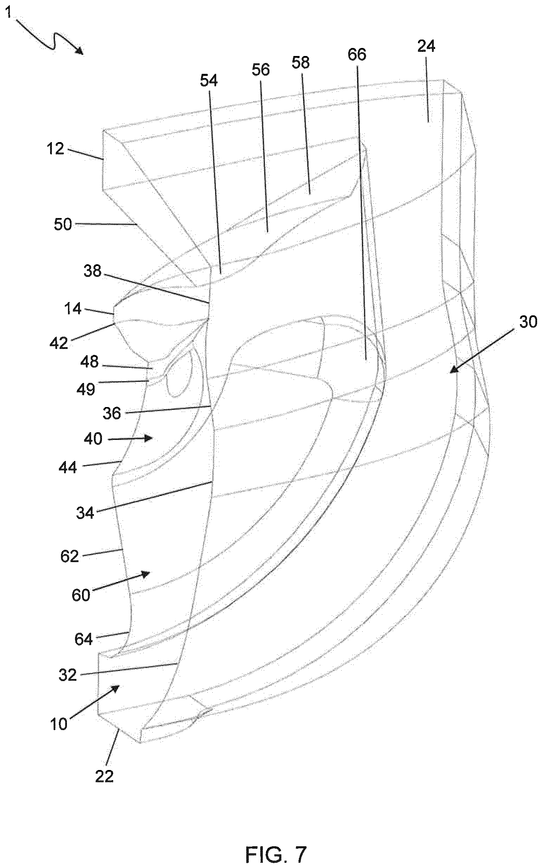

Figs. 1 and 7 shows a U-shaped recess 60 formed in the sunken section 14 beneath the cavity 40. The U-shaped recess may be formed primarily to house one or more optional secondary light sources (e.g. red LEDs). However, as shown in Fig. 5, the cross-sectional profile of the recess 60 comprises a linear slope 62 from its top edge to a base of the recess, and a curved surface 64 from the base to the bottom edge. This cross-section profile is constant through the U-shaped recess between two rounded lateral terminal portions.

The top edge of the recess surrounds and follows the bottom edge of the lower cupped section 43 of the cavity 40. The inner surface of the recess is frosted to scatter any light that enters it into the lens body. This may help to capture any stray light that escapes downward from the cavity 40.

The rim 12 may have one or more engagement elements, such as flange 16 and tabs 18 shown in Fig. 8a and 8b, protruding out rearwards or laterally from the back surface 10. The engagement elements enable the lens 1 to be mounted in or on an object or surface without covering any part of the front surface 30 or side surface 20.

The function of the lens is now described with reference to Figs. 8a and 8b.

In use, a diffuse light source 70, preferably with a Lambertian intensity distribution, such as an LED, is mounted at the back surface within the cavity 40. The light source 70 thus emits light inside the cavity 40 which is incident on the three functional surfaces of the cavity, i.e. the undulating top surface and the linear surfaces 48 of the indented upper section 41 and the concave surface of the lower cupped section 43. Each of these surfaces is a boundary at which refraction takes place, as shown in Figs. 8a and 8b.

Light which is incident on the concave surface of the lower cupped section 43, i.e. light incident on the cavity below the lip 49, is refracted towards the front surface of the bottom lens section 32 and lower intermediate lens section 34.

Light which is incident on the linear surfaces 48 of the indented upper section, is refracted towards the front surface of the upper intermediate lens section 36. The linear surfaces 48 are arranged to mimic the shape of the front edge of the reflective surface 52 in order to capture all the upward incident light that would otherwise escape beyond the front edge of the reflective surface 52. The inclined nature of the linear surfaces 48 causes this light to be redirected forwardly.

Light which is incident on the undulating top surface of the indented upper section 41 is refracted on to the reflective surface 52, from where it is reflected towards the front surface of the top lens section 38. In this embodiment, the lens is arranged to redirect the upward light from the light source into a laterally spread light, e.g. for illuminating the walls of a room. The undulating top surface spreads the incident light thereon into a more disperse distribution.

The reflective surface 52 of the panoramic reflector 50 has a focusing effect on the light incident on it. Light from the top surface of the cavity 40 that is incident on the lower edge of the reflective surface 52 is reflected in direction substantially perpendicular to the back surface 10. Light from the top surface of the cavity 40 that is incident on the upper edge of the reflective surface 52 is at an downward angle. The light distribution from the reflective surface 52 lies between these two directions. The distribution thus converges as it travels towards the front surface of the top lens section 38.

The light reflected from the reflective surface 52 is actually incident on the lateral channel across the front surface of the top lens section 38. The shape of this surface acts to refract the incident light in order to spread slightly the converging distribution into a downwardly angled distribution, i.e. in which substantially all the light is directed at an angle below horizontal. This distribution overlaps with the output light from the other lens sections. The overlap can be improved by frosting the optically polished surfaces.

The lateral arch of the front surface assists in spreading the lateral distribution of the light. Fig. 8b shows that the distribution from the front surface can be over a full 180° range. In fact it is also possible for light at the lateral edges of the channel to be refracted in a backwards of the back surface, i.e. so that the lateral distribution exceeds 180°. Having even only 1° or 2° of back refraction in this manner is useful is providing a complete light source with only two lenses, as explained below.

The light refracted from the linear surfaces 48 is further refracted by the front surface of the upper intermediate lens section 36. The lateral distribution of this light is spread outwardly similarly to the light from the front surface of the top lens section. However, the backward tilt of the front surface of the upper intermediate lens section 36 causes the vertical distribution of the output light to be spread in a substantially downward distribution from a horizontal plane (or a small upward angle, e.g. 1° from horizontal) over a relatively limited angle, e.g. less than 30°. This distribution overlaps with the distribution from the front surfaces of the bottom lens section 32 and lower intermediate lens section 34.

The refraction of the incident light at the front surfaces of the bottom lens section 32 and the lower intermediate lens section 34 spreads the light from the lower cupped portion 43 of the cavity 40 laterally and vertically. The convex bulges either side of the depression in the front surface of the bottom lens section 32 focus towards two respective focal regions, which can be located towards the corners of a room opposite to the lens to ensure that even illumination can be provided in the corners of a room. The convex bulges may also enable downward light incident at high angles to be more effectively spread than if the bulges where not present.

The lateral spread from the front surfaces of the bottom lens section 32 and the lower intermediate lens section 34 spans at least 180°, and again preferably includes a small angle of backward light at each side. The full angular range for the lateral distribution may be 182°. The vertical distribution is preferably at least 90° from a horizontal plane downwards. Again there is preferably a small angle (e.g. 1°) of backward light. The full angular range of the vertical distribution may therefore be 91°.

The linear slope 62 of the recess 60 can act to reflect light incident thereon from the cavity 40 by total internal reflection back through the lens body 5 towards the front surface 30. The recess 60 may thus redirect stray light towards the front surface of the lens so no light is wasted However, the primary purpose of the recess 60 is to provide space for one or more optional secondary light sources, such as red LEDs, which may operate e.g. when the lighting device is in a standby mode.

The overall distribution of light from the lens can be visualised as a half hemisphere in a lower quadrant between intersecting vertical and horizontal planes. However, the lens can also beneficially extend the half hemisphere slightly (by 1° or 2°) into the other lower quadrant, i.e. to provide refracted light rays which project behind the plane of the back surface of the lens.

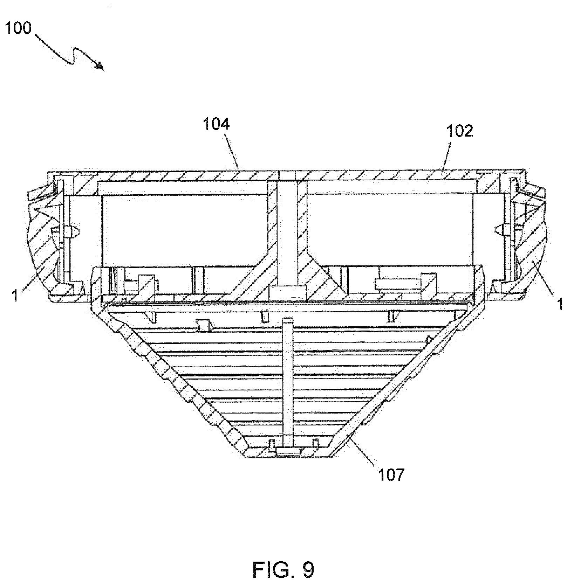

A second embodiment of the invention is discussed below with reference to Figs. 9 to 11.

Fig. 9 shows a light emitting device that is a second embodiment of the invention. In this example the light emitting device is a fire alarm base device 100 having two of the lenses 1 discussed above mounted on opposite sides thereof. The base device 100 comprises a housing, i.e. a cylindrical housing, in which an alarm and various control electronics are located, as is conventional. The housing has an upper surface 104 adapted for attachment to a ceiling or wall surface. The housing has a sounder or detector 107 mounted on and projecting away from a lower surface.

The lenses 1 are mounted in slots in opposing positions on the side of the base device 100 facing away from each other. The lower edge 22 of the each lens is distal to the surface of the device attachable to a wall. Each lens is held in slots in the base device into which the flange 16 is fitted. Each lens is held in the slots by a cover or sealing gasket which fits over the flange and slots. The gaskets are of a thickness that a portion of the side surface 20 and the front surface 30 of each lens projects beyond the gasket. The tabs 18 on the back surface 10 of each lens fits into the base device to aid in holding the lens in position.

Each lens 1 has PCB fitted to the back surface 10 with an LED located on a side of the PCB facing into the lens. The LED is positioned with the shell of the LED protruding into the cavity 40 of each lens. The PCB is held in position relative to each lens by two holes through which the tabs 18 project.

When the alarm is triggered, the LEDs illuminate to shine light through the lenses. The backwards directed light from the lenses ensures that at a certain distance (e.g. less than three metres, e.g. 2.8 m) from the base device 100, the distributions of the light from the lenses overlap to give a continuous light distribution in a hemisphere around the base device.

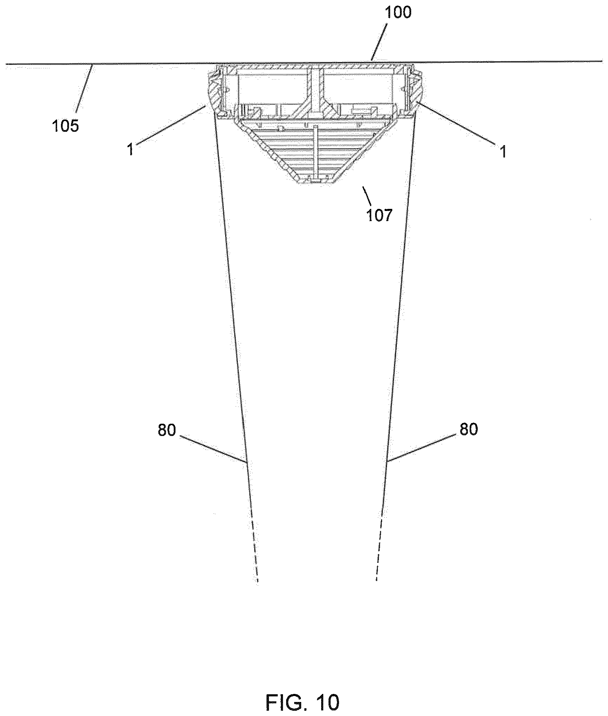

The light distribution is illustrated (in an exaggerated manner) in Fig. 10. A light ray 80 at the edge of the distribution from each lens projects 1° behind the back surface of each lens. The two light rays are converging towards each other and the detector or sounder does not. disrupt the path of the light rays.

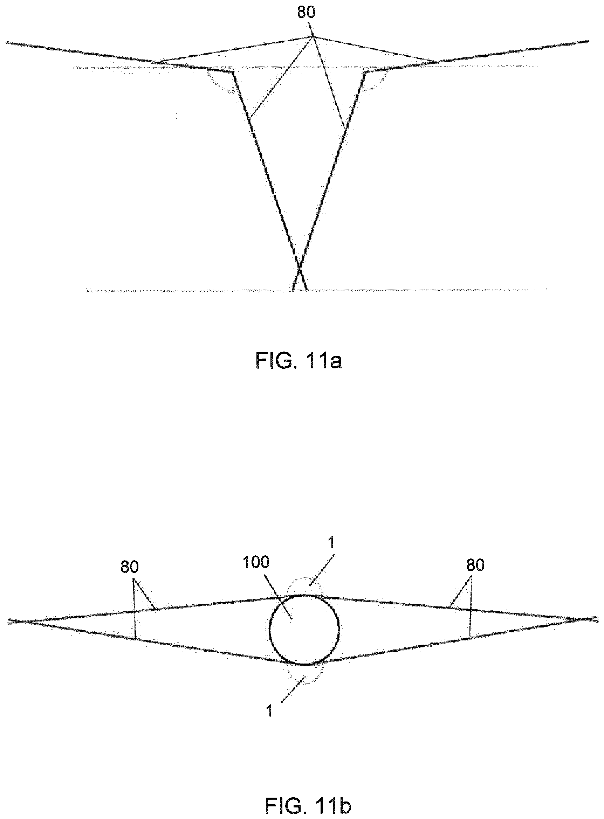

Figs. 11a and 11b shown light rays at the edge of the distribution of light from each lens. Fig. 11a shows the light rays in a vertical plane and Fig. 11b shows the light rays in a horizontal plane.

The base device 100 may have one or more secondary LEDs fitted into the recess 60 of each lens 1. All LEDs used in the device are preferably Surface-Mount Technology (SMT) LEDs. LEDs are preferred as light sources for the base device 100 because they can be placed close to the lens 1 without damaging the lens due to exposure to heat. Heat produced by the LED is typically generated at the base of the LED which is then conducted away through the PCB. LEDs also use less power than filament light sources and a low cost.

It is desirable to locate the LED centrally in the cavity 40, i.e. within a predetermined tolerance distance from a horizontal central axis through the cavity 40. The central axis is a horizontal line on the (vertical) plane of symmetry where each point of the line lies at an equal distance the points where the top and bottom edges of the cavity intersect the plane of symmetry.

According to the above construction, the base device is able to provide a full unbroken hemisphere light distribution at a predetermined distance below the device using only two lenses.

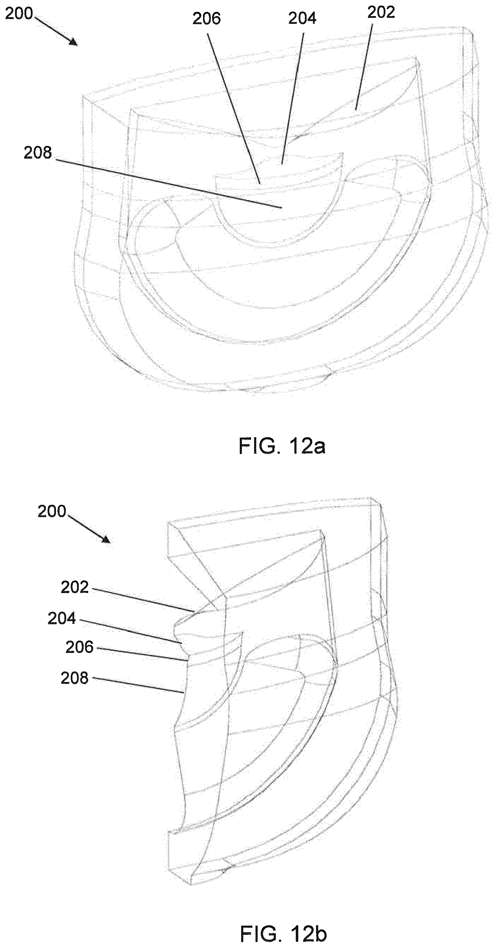

Figs. 12a and 12b show an illustrative example which is a lens 200 having a very similar structure and function to the lens 1 shown in Figs. 1 to 7. However, whereas the lens 1 was configured to be particularly suitable for ceiling-mounted lighting devices, the lens 200 is configured to be suitable for a wall-mounted device. Description of features in common with the lens 1 discussed above is not repeated; the discussion below concentrates on the differences between the lenses.

Lens 200 differs from lens 1 in the shape of its first refractive boundary (i.e. the inner surface of the cavity) and in the shape of its panoramic reflective surface 202. In this example, the panoramic reflective surface 202 does not have the outer angled triangular surfaces. The reflective surface 202 is a smoothly curved surfaces having a convex central section surround on each side by a concave portion. The convex central section straddles the plane of symmetry of the lens and fans out from a point on the sunken section at the back of the lens to a curve at an upper edge of the reflective surface. The concave portions extend from a flat transition boundary with a respective side of the convex central section.

The cavity in this example is also defined by two sections: an upper indented section which in this case resembles a semi-circle when viewed from above, and a lower cupped section having a tapering profile. The upper section has a top surface 204 facing upwards into the lens body. The top surface 204 extends laterally from the top edge of a curved band 206 that runs in an arc within the cavity. The top surface has an undulating profile in the same manner as the lens 1 discussed above.

The lower cupped section has a concave inner surface 208 whose radial depth decreases downwardly along the lens from a bottom edge of the curved band 206. Since the curved band is in the shape of an arc, the lower cupped section does not have the transition portions seen in the lens 1 discussed above.

The differences in the shape of the first refractive boundary (inner surface of the cavity) and the reflective surface have an effect on the resultant light distribution. This lens is configured for a wall-mounted light device, which means it is preferable for it to produce a light distribution within a cuboidal volume located forwardly of the lens. The arc shape of the curved band may assist in achieving this function, as it tends to focus the refracted light within the required volume. This may contrast with the lens 1 discussed above, which spreads the light in a half cylindrical (or frustoconical) distribution.

## Claims

1. A ceiling-mounted visual-alarm light emitting device (100) comprising:
a base unit mounted on a ceiling and projecting downwardly therefrom;
a pair of diffuse light sources (70) mounted on opposing side surfaces of the base unit, each light source (70) lying on a respective optical axis that is perpendicular to the respective side surface of the base unit; and
a pair of lenses (1), each lens (1) being mounted over a respective one of the light sources (70) and being configured to redirect incident light emitted forwards from the side surface of the base unit by the light source (70), the lenses (1) comprising:
a transparent lens body (5) having a back surface (10) lying on the side surface of the base unit;
a cavity (40) in the lens body (5) projecting inwards from the back surface (10) along the optical axis, the lens (1) being mounted over the light source (70) so that the light source (70) is received in the cavity (40);
a first refractive boundary (41, 43, 48, 49) at the inner surface (41, 43, 48, 49) of the cavity (40);
a second refractive boundary (30) at a front surface (30) of the lens body (1); and
a reflector (50) located in the lens body (1) above the cavity (40) for deflecting incident light emitted upwards from the cavity (40), via the first refractive boundary (41, 43, 48, 49), in a transverse direction towards the front surface (30) of the lens body (5);
wherein the second refractive boundary is arranged so that all of the light emitted from the cavity (40) via the first refractive boundary (41, 43, 48, 49) is incident on the second refractive boundary directly or via the reflector (50) ;
wherein the edges of the second refractive boundary (30) are arranged to refract light (80) incident thereon, emitted from the cavity (40) via the first refractive boundary (41, 43, 48, 49), in a rearward direction both in a vertical plane and in a horizontal plane, whereby the light distribution from the pair of lenses (1) overlaps at a predetermined distance from the base unit to give a continuous light distribution in a hemisphere around the base unit.

2. A ceiling-mounted visual-alarm light emitting device (100) according to claim 1, wherein the reflector (50) is a reflective collimator arranged to narrow the distribution of light incident thereon.

3. A ceiling-mounted visual-alarm light emitting device (100) according to any preceding claim, wherein the first refractive boundary (41, 43, 48, 49) comprises a top surface (41) of the cavity (40) which faces towards the reflector (50) and an inner surface of the cavity (43, 48, 49) which faces towards the second refractive boundary (30), and wherein the geometry of the top surface (41) is configured so that all upward light that would be incident on the reflector (50) in the absence of the first refractive boundary (41, 43, 48, 49) is transmitted by the top surface (41), whereby light transmitted by the top surface (41) is received at the reflector (50).

4. A ceiling-mounted visual-alarm light emitting device (100) according to claim 3, wherein the top surface (41) of the cavity has an undulating profile.

5. A ceiling-mounted visual-alarm light emitting device (100) according to claim 3 or 4, wherein the inner surface (43, 48, 49) of the cavity (40) comprises an upper portion (48) comprising a band that depends from the edge of the top surface (41), a lower portion (43) having a freeform shape, and a transition region (49) in which the upper portion (48) smoothly transforms into the lower portion (43).

6. A ceiling-mounted visual-alarm light emitting device (100) according to claim 5, wherein the band (48) has an inwardly sloping profile for refracting incident light in a downward direction towards the second refractive boundary (30) .

7. A ceiling-mounted visual-alarm light emitting device (100) according to claim 5 or 6, wherein the band (48) is defined by a pair of symmetrical surfaces which extend into the lens body (5) in a linear manner at an oblique angle.

8. A ceiling-mounted visual-alarm light emitting device (100) according to claim 5, wherein the second refractive boundary (30) comprises:
a top lens section (38) arranged to receive deflected light from the reflector (50);
an upper intermediate lens section (36) beneath the top lens section (38) and above the optical axis, the upper intermediate lens section (36) being arranged to receive light from the upper portion (48) of the inner surface (43, 48, 49) of the cavity (40);
a lower intermediate lens section (34) beneath the upper intermediate lens section (36), the lower intermediate lens section (34) straddling the optical axis; and
a bottom lens section (32) beneath the lower intermediate lens section (34), wherein the lower intermediate lens section (34) and bottom lens section (32) are arranged to receive light from the lower portion (34) of the inner surface (43, 48, 49) of the cavity (40).

9. A ceiling-mounted visual-alarm light emitting device (100) according to claim 8, wherein the top lens section (38) has a freeform front surface which arches in a convex manner transversely across the lens (1), and has a concave profile which forms a transverse channel across the front of the lens (1) .

10. A ceiling-mounted visual-alarm light emitting device (100) according to claim 8 or 9, wherein the upper intermediate lens section (36) has a freeform front surface which arches in a convex manner transversely across the lens (1), and has a profile comprising a linear slope outwards from the lens body (5) with increasing distance from the top lens section (38).

11. A ceiling-mounted visual-alarm light emitting device (100) according to claim 8 or 9, wherein the bottom lens section (32) has a freeform front surface comprising a pair of convex bulges formed symmetrically about a vertical plane through the optical axis.

12. A ceiling-mounted visual-alarm light emitting device (100) according to claim 11, wherein the lower intermediate lens section (34) comprises a free form front surface that provides a smooth transition between the upper intermediate lens section (36) and the pair of convex bulges in the bottom lens section (32).

13. A ceiling-mounted visual-alarm light emitting device (100) according to any preceding claim including a upwardly angled reflector formed below the cavity (40) to deflect downward scattered light in the lens body (5) towards the second refractive boundary (30).

14. A ceiling-mounted visual-alarm light emitting device (100) according to claim 13, wherein the upwardly angled reflector is an upper reflective surface (62) of a lower recess (60) formed in the back surface of the lens body (5) below the cavity (40).

15. A ceiling-mounted visual-alarm light emitting device (100) according to claim 14, wherein the lower recess (60) is sized to house one or more secondary light sources.

16. A ceiling-mounted visual-alarm light emitting device (100) according to any one of the previous claims having only two lenses (1).

17. A ceiling-mounted visual-alarm light emitting device (100) according to any one of the previous claims, wherein the light sources (70) comprise surface-mounted LEDs.

## Patentansprüche

1. Deckenmontierte optisches-Warnsignallicht-emittierende Vorrichtung (100), umfassend:
eine Basiseinheit, die an einer Decke montiert ist und nach unten vorsteht;
ein Paar von diffusen Lichtquellen (70), die an gegenüberliegenden Seitenflächen der Basiseinheit angebracht sind, wobei jede Lichtquelle (70) auf einer jeweiligen optischen Achse liegt, die zur jeweiligen Seitenfläche der Basiseinheit senkrecht ist; und
ein Paar von Linsen (1), wobei jede Linse (1) über einer jeweiligen der Lichtquellen (70) angeordnet und so konfiguriert ist, dass sie einfallendes Licht, das von der Seitenfläche der Basiseinheit durch die Lichtquelle (70) nach vorne emittiert wird, umlenkt, wobei die Linsen (1) Folgendes umfassen:
einen lichtdurchlässigen Linsenkörper (5), der eine Rückfläche (10) aufweist, die auf der Seitenfläche der Basiseinheit liegt;
einen Hohlraum (40) im Linsenkörper (5), der von der Rückfläche (10) entlang der optischen Achse nach innen vorsteht, wobei die Linse (1) über der Lichtquelle (70) derart angebracht ist, dass die Lichtquelle (70) im Hohlraum (40) aufgenommen ist;
eine erste Lichtbrechungsgrenzfläche (41, 43, 48, 49) an der Innenfläche (41, 43, 48, 49) des Hohlraums;
eine zweite Lichtbrechungsgrenzfläche (30) an einer Vorderfläche (30) des Linsenkörpers (1); und
einen Reflektor (50), der im Linsenkörper (1) oberhalb des Hohlraums (40) angeordnet ist, um einfallendes Licht, das vom Hohlraum (40) nach oben emittiert wird, über die erste Lichtbrechungsgrenzfläche (41, 43. 48, 49) in eine Querrichtung zur Vorderfläche (30) des Linsenkörpers (5) hin abzulenken;
wobei die zweite Lichtbrechungsgrenzfläche derart angeordnet ist, dass das gesamte vom Hohlraum (40) emittierte Licht über die erste Lichtbrechungsgrenzfläche (41, 43, 48, 49) auf die zweite Lichtbrechungsgrenzfläche direkt oder über den Reflektor (50) einfällt;
wobei die Kanten der zweiten Lichtbrechungsgrenzfläche (30) so angeordnet sind, dass sie darauf einfallendes Licht (80), das vom Hohlraum (40) über die erste Lichtbrechungsgrenzfläche (41, 43, 48, 49) emittiert wird, in eine Rückwärtsrichtung sowohl in einer vertikalen Ebene als auch in einer horizontalen Ebene brechen, wobei die Lichtverteilung von dem Linsen (1) -Paar in einem vorbestimmten Abstand von der Basiseinheit überlappt, um eine kontinuierliche Lichtverteilung in einer Halbkugel um die Basiseinheit herum vorzugeben.

2. Deckenmontierte optisches-Warnsignallicht-emittierende Vorrichtung (100) gemäß Anspruch 1, wobei der Reflektor (50) ein reflektierender Kollimator ist, der so angeordnet ist, dass er die Verteilung von darauf einfallendem Licht eingrenzt.

3. Deckenmontierte optisches-Warnsignallicht-emittierende Vorrichtung (100) gemäß einem der vorangegangenen Ansprüche, wobei die erste Lichtbrechungsgrenzfläche (41, 43, 48, 49) eine Oberseitenfläche (41) des Hohlraums (40), die dem Reflektor (50) zugewandt ist, und eine Innenfläche des Hohlraums (43, 48, 49), die der zweiten Lichtbrechungsgrenzfläche (30) zugewandt ist, umfasst, und wobei die Geometrie der Oberseitenfläche (41) so konfiguriert ist, dass das gesamte nach oben gerichtete Licht, das bei Nicht-Vorhandensein der ersten Lichtbrechungsgrenzfläche (41, 43, 48, 49) auf den Reflektor (50) einfallen würde, durch die Oberseitenfläche (41) übertragen wird, wobei Licht, das durch die Oberseitenfläche (41) übertragen wird, am Reflektor (50) empfangen wird.

4. Deckenmontierte optisches-Warnsignallicht-emittierende Vorrichtung (100) gemäß Anspruch 3, wobei die Oberseitenfläche (41) des Hohlraums ein Wellenprofil aufweist.

5. Deckenmontierte optisches-Warnsignallicht-emittierende Vorrichtung (100) gemäß Anspruch 3 oder 4, wobei die Innenfläche (43, 48, 49) des Hohlraums (40) einen oberen Abschnitt (48), der ein Band umfasst, das von der Kante der Oberseitenfläche (41) herabhängt, einen unteren Abschnitt (43), der freiform-förmig ausgebildet ist, und eine Übergangsregion (49), in welcher der obere Abschnitt (48) fließend in den unteren Abschnitt (43) übergeht, umfasst.

6. Deckenmontierte optisches-Warnsignallicht-emittierende Vorrichtung (100) gemäß Anspruch 5, wobei das Band (48) ein nach innen geneigtes Profil zum Brechen von einfallendem Licht in eine nach unten gerichtete Richtung zur zweiten Lichtbrechungsgrenzfläche (30) hin aufweist.

7. Deckenmontierte optisches-Warnsignallicht-emittierende Vorrichtung (100) gemäß Anspruch 5 oder 6, wobei das Band (48) durch ein Paar von symmetrischen Oberflächen definiert ist, die sich in den Linsenkörper (5) in linearer Art und Weise in einem schrägen Winkel hinein erstrecken.

8. Deckenmontierte optisches-Warnsignallicht-emittierende Vorrichtung (100) gemäß Anspruch 5, wobei die zweite Lichtbrechungsgrenzfläche (30) Folgendes umfasst:
einen Oberseitenlinsenabschnitt 838), der so ausgestaltet ist, dass er vom Reflektor (50) abgelenktes Licht empfängt;
einen oberen Zwischenlinsenabschnitt (36) unterhalb des Oberseitenlinsenabschnitts (38) und oberhalb der optischen Achse, wobei der obere Zwischenlinsenabschnitt (36) so ausgestaltet ist, dass er Licht vom oberen Abschnitt (48) der Innenfläche (43, 48, 49) des Hohlraums (40) empfängt;
einen unteren Zwischenlinsenabschnitt (34) unterhalb des oberen Zwischenlinsenabschnitts (36), wobei der untere Zwischenlinsenabschnitt (34) die optische Achse überspannt; und
einen Unterseitenlinsenabschnitt (32) unterhalb des unteren Zwischenlinsenabschnitts (34), wobei der untere Zwischenlinsenabschnitt (34) und der Unterseitenlinsenabschnitt (32) so ausgestaltet sind, dass sie Licht vom unteren Abschnitt (34) der Innenfläche (43, 48, 49) des Hohlraums (40) empfangen.

9. Deckenmontierte optisches-Warnsignallicht-emittierende Vorrichtung (100) gemäß Anspruch 8, wobei der Oberseitenlinsenabschnitt (38) eine freiform-förmige Vorderfläche aufweist, die sich in einer konvexen Art und Weise quer über die Linse (1) wölbt, und ein konkaves Profil aufweist, das einen Querkanal über die Vorderseite der Linse (1) hinweg bildet.

10. Deckenmontierte optisches-Warnsignallicht-emittierende Vorrichtung (100) gemäß Anspruch 8 oder 9, wobei der obere Zwischenlinsenabschnitt (36) eine freiform-förmige Vorderfläche aufweist, die sich in einer konvexen Art und Weise quer über die Linse (1) wölbt, und ein Profil aufweist, das eine vom Linsenkörper (5) nach außen gerichtete, lineare Neigung mit zunehmendem Abstand vom Oberseitenlinsenabschnitt (38) umfasst.

11. Deckenmontierte optisches-Warnsignallicht-emittierende Vorrichtung (100) gemäß Anspruch 8 oder 9, wobei der Unterseitenlinsenabschnitt (32) eine freiform-förmige Vorderfläche aufweist, die ein Paar von konvexen Ausbuchtungen umfasst, die symmetrisch um eine vertikale Ebene herum, durch die optische Achse hindurch, ausgebildet sind.

12. Deckenmontierte optisches-Warnsignallicht-emittierende Vorrichtung (100) gemäß Anspruch 11, wobei der untere Zwischenlinsenabschnitt (34) eine freiform-förmige Vorderfläche umfasst, die einen fließenden Übergang zwischen dem oberen Zwischenlinsenabschnitt (36) und dem Paar von konvexen Ausbuchtungen im Unterseitenlinsenabschnitt (32) bereitstellt.

13. Deckenmontierte optisches-Warnsignallicht-emittierende Vorrichtung (100) gemäß einem der vorangegangenen Ansprüche, umfassend einen nach oben abgewinkelten Reflektor, der unterhalb des Hohlraums (40) ausgebildet ist, um nach unten gestreutes Licht im Linsenkörper (5) zur zweiten Lichtbrechungsgrenzfläche (30) hin abzulenken.

14. Deckenmontierte optisches-Warnsignallicht-emittierende Vorrichtung (100) gemäß Anspruch 13, wobei der nach oben abgewinkelte Reflektor eine obere reflektierende Oberfläche (62) einer unteren Aussparung (60) ist, die in der Rückfläche des Linsenkörpers (5) unterhalb des Hohlraums (40) ausgebildet ist.

15. Deckenmontierte optisches-Warnsignallicht-emittierende Vorrichtung (100) gemäß Anspruch 14, wobei die untere Aussparung (60) von einer solchen Größe ist, dass sie eine oder mehrere sekundäre Lichtquellen aufnimmt.

16. Deckenmontierte optisches-Warnsignallicht-emittierende Vorrichtung (100) gemäß einem der vorangegangenen Ansprüche, die lediglich zwei Linsen (1) aufweist.

17. Deckenmontierte optisches-Warnsignallicht-emittierende Vorrichtung (100) gemäß einem der vorangegangenen Ansprüche, wobei die Lichtquellen (70) oberflächenmontierte LEDs umfassen.

## Revendications

1. Dispositif d'émission de lumière d'alarme visuelle montée au plafond (100) comprenant :
une unité de base montée sur un plafond et faisant saillie vers le bas à partir de celui-ci ;
une paire de sources de lumière diffuse (70) montées sur les surfaces latérales opposées de l'unité de base, chaque source de lumière (70) se trouvant sur un axe optique respectif qui est perpendiculaire à la surface latérale respective de l'unité de base ; et
une paire de lentilles (1), chaque lentille (1) étant montée sur l'une respective des sources de lumière (70) et étant configurée pour rediriger la lumière incidente émise vers l'avant à partir de la surface latérale de l'unité de base par la source de lumière (70), les lentilles (1) comprenant :
un corps de lentille transparent (5) comportant une surface arrière (10) se trouvant sur la surface latérale de l'unité de base ;
une cavité (40) dans le corps de lentille (5) faisant saillie vers l'intérieur à partir de la surface arrière (10) le long de l'axe optique, la lentille (1) étant montée sur la source de lumière (70) de sorte que la source de lumière (70) soit reçue dans la cavité (40) ;
une première frontière de réfraction (41, 43, 48, 49) au niveau de la surface intérieure (41, 43, 48, 49) de la cavité (40) ;
une deuxième frontière de réfraction (30) au niveau d'une surface avant (30) du corps de lentille (1) ; et
un réflecteur (50) situé dans le corps de lentille (1) au-dessus de la cavité (40) pour défléchir la lumière incidente émise vers le haut à partir de la cavité (40), par l'intermédiaire de la première frontière de réfraction (41, 43, 48, 49), dans une direction transversale vers la surface avant (30) du corps de lentille (5) ;
dans lequel la deuxième frontière de réfraction est agencée de sorte que toute la lumière émise à partir de la cavité (40) par l'intermédiaire de la première frontière de réfraction (41, 43, 48, 49) frappe la deuxième frontière de réfraction directement ou par l'intermédiaire du réflecteur (50) ;
dans lequel les bords de la deuxième frontière de réfraction (30) sont agencés pour réfracter la lumière (80) qui les frappe, émise à partir de la cavité (40) par l'intermédiaire de la première frontière de réfraction (41, 43, 48, 49), dans une direction vers l'arrière à la fois dans un plan vertical et dans un plan horizontal, moyennant quoi les distributions de lumière de la paire de lentilles (1) se recouvrent à une distance prédéterminée de l'unité de base pour donner une distribution de lumière continue dans un hémisphère autour de l'unité de base.

2. Dispositif d'émission de lumière d'alarme visuelle montée au plafond (100) selon la revendication 1, dans lequel le réflecteur (50) est un collimateur réfléchissant agencé pour rétrécir la distribution de la lumière qui le frappe.

3. Dispositif d'émission de lumière d'alarme visuelle montée au plafond (100) selon l'une quelconque des revendications précédentes, dans lequel la première frontière de réfraction (41, 43, 48, 49) comprend une surface supérieure (41) de la cavité (40) qui est orientée vers le réflecteur (50) et une surface intérieure de la cavité (43, 48, 49) qui est orientée vers la deuxième frontière de réfraction (30), et dans lequel la géométrie de la surface supérieure (41) est configurée de sorte que toute la lumière vers le haut qui frapperait le réflecteur (50) en l'absence de la première frontière de réfraction (41, 43, 48, 49) soit transmise par la surface supérieure (41), moyennant quoi la lumière transmise par la surface supérieure (41) est reçue au niveau du réflecteur (50).

4. Dispositif d'émission de lumière d'alarme visuelle montée au plafond (100) selon la revendication 3, dans lequel la surface supérieure (41) de la cavité a un profil ondulé.

5. Dispositif d'émission de lumière d'alarme visuelle montée au plafond (100) selon la revendication 3 ou 4, dans lequel la surface intérieure (43, 48, 49) de la cavité (40) comprend une partie supérieure (48) comprenant une bande qui pend du bord de la surface supérieure (41), une partie inférieure (43) ayant une forme libre, et une région de transition (49) dans laquelle la partie supérieure (48) se transforme en douceur en la partie inférieure (43).

6. Dispositif d'émission de lumière d'alarme visuelle montée au plafond (100) selon la revendication 5, dans lequel la bande (48) a un profil incliné vers l'intérieur pour réfracter la lumière incidente dans une direction vers le bas vers la deuxième frontière de réfraction (30).

7. Dispositif d'émission de lumière d'alarme visuelle montée au plafond (100) selon la revendication 5 ou 6, dans lequel la bande (48) est définie par une paire de surfaces symétriques qui s'étendent dans le corps de lentille (5) de manière linéaire selon un angle oblique.

8. Dispositif d'émission de lumière d'alarme visuelle montée au plafond (100) selon la revendication 5, dans lequel la deuxième frontière de réfraction (30) comprend :
une section de lentille supérieure (38) agencée pour recevoir la lumière défléchie à partir du réflecteur (50) ;
une section de lentille intermédiaire supérieure (36) au-dessous de la section de lentille supérieure (38) et au-dessus de l'axe optique, la section de lentille intermédiaire supérieure (36) étant agencée pour recevoir la lumière provenant de la partie supérieure (48) de la surface intérieure (43, 48, 49) de la cavité (40) ;
une section de lentille intermédiaire inférieure (34) au-dessous de la section de lentille intermédiaire supérieure (36), la section de lentille intermédiaire inférieure (34) enjambant l'axe optique ; et
une section de lentille inférieure (32) au-dessous de la section de lentille intermédiaire inférieure (34), dans lequel la section de lentille intermédiaire inférieure (34) et la section de lentille inférieure (32) sont agencées pour recevoir la lumière provenant de la partie inférieure (34) de la surface intérieure (43, 48, 49) de la cavité (40) .

9. Dispositif d'émission de lumière d'alarme visuelle montée au plafond (100) selon la revendication 8, dans lequel la section de lentille supérieure (38) comporte une surface avant de forme libre qui forme une arche d'une manière convexe transversalement à travers la lentille (1), et a un profil concave qui forme un canal transversal à travers l'avant de la lentille (1).

10. Dispositif d'émission de lumière d'alarme visuelle montée au plafond (100) selon la revendication 8 ou 9, dans lequel la section de lentille intermédiaire supérieure (36) comporte une surface avant de forme libre qui forme une arche d'une manière convexe transversalement à travers la lentille (1), et a un profil comprenant une pente linéaire vers l'extérieur à partir du corps de lentille (5) avec une distance croissante par rapport à la section de lentille supérieure (38).

11. Dispositif d'émission de lumière d'alarme visuelle montée au plafond (100) selon la revendication 8 ou 9, dans lequel la section de lentille inférieure (32) comporte une surface avant de forme libre comprenant une paire de bombements convexes formés symétriquement autour d'un plan vertical à travers l'axe optique.

12. Dispositif d'émission de lumière d'alarme visuelle montée au plafond (100) selon la revendication 11, dans lequel la section de lentille intermédiaire inférieure (34) comprend une surface avant de forme libre qui réalise une transition douce entre la section de lentille intermédiaire supérieure (36) et la paire de bombements convexes dans la section de lentille inférieure (32).

13. Dispositif d'émission de lumière d'alarme visuelle montée au plafond (100) selon l'une quelconque des revendications précédentes comprenant un réflecteur incliné vers le haut formé au-dessous de la cavité (40) pour défléchir vers le bas la lumière diffusée dans le corps de lentille (5) vers la deuxième frontière de réfraction (30).

14. Dispositif d'émission de lumière d'alarme visuelle montée au plafond (100) selon la revendication 13, dans lequel le réflecteur incliné vers le haut est une surface réfléchissante supérieure (62) d'un évidement inférieur (60) formé dans la surface arrière du corps de lentille (5) au-dessous de la cavité (40).

15. Dispositif d'émission de lumière d'alarme visuelle montée au plafond (100) selon la revendication 14, dans lequel l'évidement inférieur (60) est dimensionné pour loger une ou plusieurs sources de lumière secondaires.

16. Dispositif d'émission de lumière d'alarme visuelle montée au plafond (100) selon l'une quelconque des revendications précédentes ne comportant que deux lentilles (1) .

17. Dispositif d'émission de lumière d'alarme visuelle montée au plafond (100) selon l'une quelconque des revendications précédentes, dans lequel les sources de lumière (70) comprennent des DEL montées en surface.
